# EUROPÄISCHE PATENTSCHRIFT

(11) **EP 2 957 382 B1**
(45) Veröffentlichungstag und Bekanntmachung des Hinweises auf die Patenterteilung: **04.07.2018**
(21) Anmeldenummer: 15169386.8
(22) Anmeldetag: 27.05.2015
(51) Int. Cl.: B23Q 1/01, B23Q 3/157, B23Q 39/02, B23Q 39/00

(54) **BEARBEITUNGSZENTRUM ZUM BEARBEITEN VON WERKSTÜCKEN**
MACHINING CENTRE FOR MACHINING WORKPIECES
CENTRE D'USINAGE DE PIÈCES

(30) Priorität: 17.06.2014 DE 102014211566
(43) Veröffentlichungstag der Anmeldung: 23.12.2015
(73) Patentinhaber: HOMAG GmbH, 72296 Schopfloch (DE)
(72) Erfinder: Calmbach, Martin, 72160 Horb-Dießen (DE); Matt, Marco, 72250 Wittlensweiler (DE)
(74) Vertreter: Hoffmann Eitle

(56) Entgegenhaltungen:
- EP-A2- 1 188 511
- EP-A2- 1 559 502
- EP-A2- 1 570 946
- DE-A1- 19 819 383
- DE-A1- 19 903 312
- US-A1- 2010 145 498
- US-A1- 2013 331 244

## Beschreibung

### Technisches Gebiet

Die Erfindung betrifft ein Bearbeitungszentrum zum Bearbeiten von Werkstücken und einen Werkzeugwechsler zur Aufnahme von Bearbeitungswerkzeugen und/oder Bearbeitungsaggregaten für eine Bearbeitungsvorrichtung mit mindestens zwei Werkzeugspindeln, insbesondere ein Bearbeitungszentrum zur Bearbeitung von Werkstücken, die bevorzugt zumindest teilweise aus Holz, Holzwerkstoffen, Kunststoff oder dergleichen bestehen, nach dem Oberbegriff von Anspruch (siehe z.B. EP-1559502-A2).

### Stand der Technik

Bearbeitungsvorrichtungen der eingangs genannten Art finden bei der Herstellung von Möbeln, Küchen oder dergleichen breite Anwendung. Um die Bearbeitungszeiten zu minimieren werden verschiedene Arbeitsvorgänge häufig gleichzeitig ausgeführt. Zu diesem Zweck kommen Bearbeitungszentren mit mindestens zwei Bearbeitungseinheiten zum Einsatz.

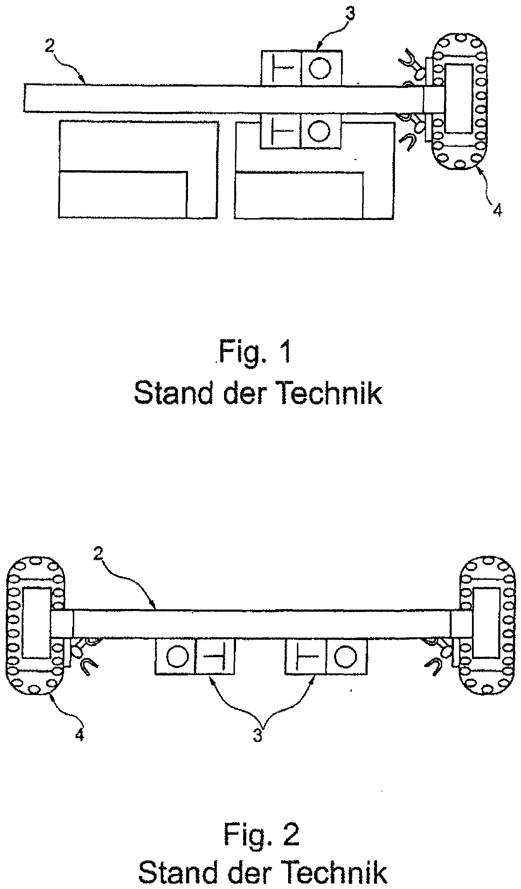

Typischerweise bestehen Bearbeitungsvorrichtungen der beschriebenen Gattung aus einer balkenförmigen Führungsanordnung, die sich über einen Aufspanntisch erstreckt, und einer Bearbeitungseinheit an jeder der beiden Seiten der balkenförmigen Führungsanordnung, die auf ein gemeinsames oder zwei separate Werkzeugwechselvorrichtungen bzw. Werkzeugmagazine zugreifen können. Dabei sind beide Werkzeugwechselvorrichtungen gemeinsam entweder vorne oder hinten an der balkenförmigen Führungsanordnung angeordnet (siehe Fig. 1).

Ferner sind Bearbeitungsvorrichtungen bekannt, bei denen sich die Spindeleinheiten auf derselben Seite der balkenförmigen Führungsanordnung befinden, wobei die Werkzeugwechselvorrichtungen vorne und hinten an der balkenförmigen Führungsanordnung angebracht sind (siehe Fig. 2) .

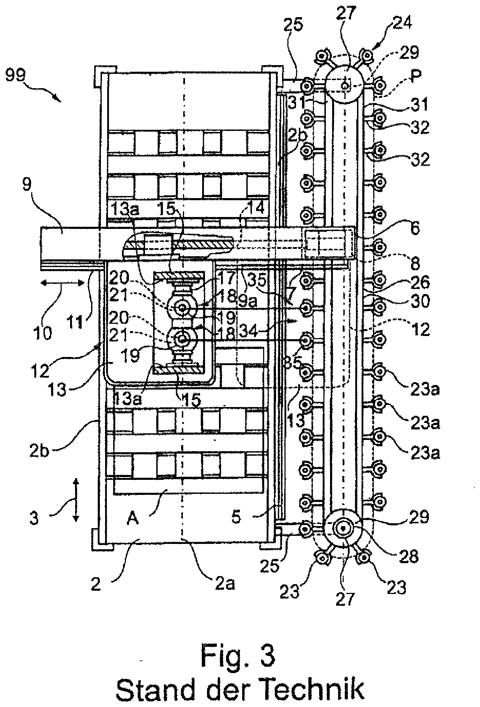

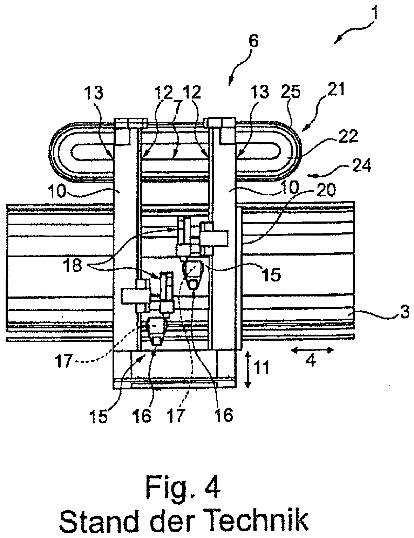

Die DE 100 21 684 A1 offenbart eine Bearbeitungsvorrichtung mit zwei Spindeleinheiten, die auf einem Schlitten angeordnet sind und auf einen Kettenwechsler zugreifen können, der sich parallel zu den Spindeleinheiten erstreckt (siehe Fig. 3). Die EP 1 815 954 B1 offenbart eine Bearbeitungsvorrichtung mit zwei zueinander parallelen balkenförmigen Führungsanordnungen und jeweils einer Spindeleinheit, welche gemeinsam auf einen Kettenwechsler zugreifen können (siehe Fig. 4).

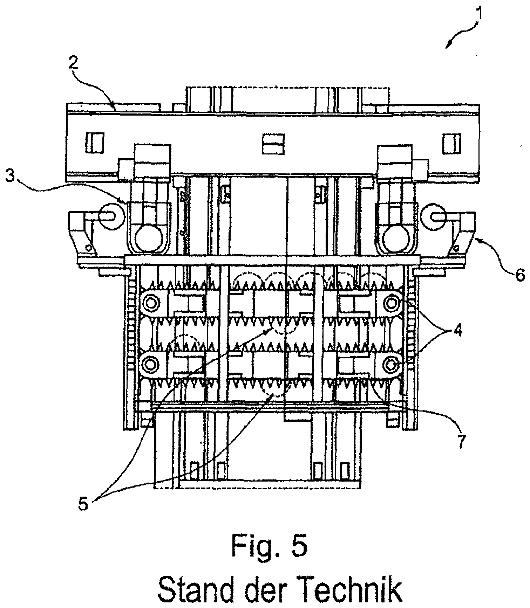

Die DE 10 201 220 709 3 A1 offenbart eine Bearbeitungsvorrichtung mit zwei Spindeleinheiten an einer Seite der balkenförmigen Führungsanordnung, welche gleichzeitig auf einen Kettenwechsler zugreifen können, der sich zumindest teilweise entlang der Längsseite der balkenförmigen Führungsanordnung erstreckt (siehe Fig. 5).

Als Magazine zur Speicherung von Bearbeitungswerkzeugen und/oder Bearbeitungsaggregaten werden sowohl Ketten- als auch Tellerwechsler eingesetzt. Bei einem Werkzeugwechsel mit Kettenwechsler kommt ein Umsetzer zum Einsatz, wobei der Umsetzer dabei zur hauptzeitparallelen Vorbereitung der Werkzeuge für den nächsten Werkzeugwechsel dient. In der Regel wird für jede Spindeleinheit ein Werkzeugwechsler vorgesehen. Die Verwendung eines Kettenwechslers ist im Allgemeinen mit Nachteilen verbunden, da diese deutlich aufwändiger und teurer als Tellerwechsler sind.

Die EP 2 626 171 B1 offenbart ein Mehrfachmagazin, bevorzugt einen Mehrfachtellerwechsler zur effizienten Speicherung von Bearbeitungswerkzeugen und/oder Bearbeitungsaggregaten in beispielsweise zwei übereinander angeordneten Tellerebenen.

Ferner sind als weitere Schriften auf diesem Gebiet zu nennen: EP 1 559 502 A2, EP 1 1855 511 A2, DE 198 19 383 A1 und US 2013/331 244 A1. Hierbei offenbart insbesondere die EP 1 559 502 A2 eine Werkzeugmaschine mit mindestens zwei parallelen und relativ zueinander verfahrbaren Werkzeugspindeln, wobei die beiden Spindeln über dieselben Spuleneinrichtungen verfahrbar sind, und die beiden Spulen ferner in Querrichtung relativ zueinander verfahrbar sind.

Bearbeitungsvorrichtungen mit den oben dargestellten Anordnungen von Bearbeitungseinheiten und Werkzeugwechselvorrichtungen haben sich bewährt, allerdings wird noch immer Optimierungspotential hinsichtlich Platz-, Kosten und Zeitersparnis sowie Bedienbarkeit entdeckt.

Vor diesem Hintergrund sind produktivere Ausgestaltungsformen von Bearbeitungsmaschinen entwickelt worden, wobei die Prozessoptimierung im Bereich des Werkzeugwechselvorgangs angesiedelt ist. Besonders von Vorteil sind Ausgestaltungsformen, welche zudem eine platzsparende Anordnung des prozessoptimierten Konzepts vorsehen. Die nachstehenden beschriebenen Anordnung von Bearbeitungseinheiten und Werkzeugwechselvorrichtungen bietet ein Höchstmaß an Platzersparnis, Flexibilität und Zeiteffizienz für Bearbeitungsmaschinen im Mehrspindelbetrieb und stellt damit eine kostengünstige Produktionsvorrichtung dar.

### Darstellung der Erfindung

Es ist Aufgabe der vorliegenden Erfindung, eine Bearbeitungsvorrichtung der eingangs genannten Art bereitzustellen, die bei bewährter Anordnung mehrerer Spindeln eine schnellere und flexiblere Einwechselung mehrerer Werkzeuge ermöglicht.

Die Aufgabe wird erfindungsgemäß durch eine Bearbeitungsvorrichtung mit den Merkmalen von Anspruch 1 gelöst. Kern der Erfindung stellt hierbei die Werkzeugwechselvorrichtung dar. Besonders vorteilhafte Weiterbildungen der Erfindung sind in den abhängigen Ansprüchen angegeben.

Der Erfindung liegt der Gedanke zugrunde, bei einer Bearbeitungsvorrichtung Bearbeitungsnebenzeiten und Bedienbarkeit durch eine geschickte Konfiguration von Werkzeugaufnahmeeinrichtungen zu erzielen. Zu diesem Zweck ist erfindungsgemäß vorgesehen, jedes einzelne Werkzeug einer Werkzeugaufnahmeeinrichtung unabhängig von mindestens einer zweiten Werkzeugaufnahmeeinrichtung in eine Werkzeugwechselposition fahren zu können, wobei der Abstand der Werkzeuge in den Werkzeugaufnahmeeinrichtungen in einer Werkzeugwechselposition dem Spindelabstand A entspricht und der Spindelabstand A ist in verschiedenen Maschinenhaupt- und Nebenzeiten konstant, abschnittsweise konstant oder variabel ist.

Durch die vorteilhafte Anordnung der Werkzeugaufnahmeeinrichtungen können die Werkzeugwechselvorgänge der Werkzeuge in den Bearbeitungseinheiten (Spindeln) parallel bzw. gleichzeitig ausgeführt werden. Im Folgenden werden solche Werkzeugwechselvorgänge beispielhaft beschrieben:
Die Spindeln beginnen zum gleichen Zeitpunkt *t1* eine Bewegung, insbesondere eine lineare Bewegung aus einer Spindelhauptposition in Richtung der Werkzeugaufnahmeeinrichtungen und erreichen zum gleichen Zeitpunkt t2 eine Spindelnebenposition, wobei die Spindelachsen bzw. Werkzeugachsen der Werkzeuge in den Bearbeitungseinheiten auf einer Geraden mit den Achsen der Werkzeuge in der Werkzeugwechselposition liegen oder die Spindelachsen den Abstand A einnehmen, der dem Achsabstand der einzuwechselnden Werkzeuge in den Werkzeugaufnahmeeinrichtungen entspricht. Der Werkzeugwechsel erfolgt dann mit Einfach- oder Mehrfachgreifern oder direkt aus den Werkzeugwechselvorrichtungen in die Spindeln im Pick-Up-Verfahren. Es ist zu beachten, dass die beschriebene Bewegung zwischen den Positionen zu den Zeitpunkten *t1* und *t2* bei gleicher Geschwindigkeit der Spindeleinheiten stattfinden kann. Allerdings ist auch zu berücksichtigen, dass die Spindeln zu unterschiedlichen Zeitpunkten *t*1_{*Spindel* 1} und *t*1*_{Spindel n}* die beschriebene Bewegung beginnen können und zum gleichen Zeitpunkt *t2* oder unterschiedlichen Zeitpunkten *t*2_{*Spindel* 1} und *t*2*_{Spindel n}* die beschriebene Spindelnebenposition erreichen können, um einen gleichzeitigen Werkzeugwechsel zu vollziehen.

Die Werkzeuge können beliebig in der Werkzeugaufnahmeeinrichtung angeordnet sein und in die Wechselposition gefahren, insbesondere gedreht werden. Das Bewegen der einzuwechselnden Werkzeuge kann dabei zu sämtlichen Maschinenhaupt- oder Nebenzeiten vollzogen werden, so kann der beschriebene Bewegungsvorgang komplett oder teilweise vor dem Zeitpunkt *t1* oder *t2* oder zwischen *t1* und *t2* stattfinden.

Ferner ist eine bauraumsparende Anordnung durch einen geringen Achsversatz der Werkzeugaufnahmeeinrichtungen möglich, insbesondere einem Achsversatz, der kleiner ist als ein Radius einer der Werkzeugaufnahmeeinrichtungen. Weiterhin eignet sich die Bearbeitungsvorrichtung besonders gut für die Anordnung der Spindeleinheiten auf nur einer Längsseite der balkenförmigen Führungsanordnung. Auf diese Weise können die Bearbeitungseinheiten in eine Richtung senkrecht zu dieser Längsseite mit minimalem oder ohne Achsabstand angeordnet werden. Außerdem stellt sich die Konstruktion der Bearbeitungsvorrichtung einfacher dar, da keine zusätzlichen Bauteile erforderlich sind oder sogar Bauteile eingespart werden können, wie beispielsweise eine Führung auf der gegenüberliegenden Seite der balkenförmigen Führungsanordnung. Weiterhin zeigt sich die Erfindung als besonders geeignet für den sogenannten Synchronbetrieb, bei dem mehrere nebeneinander auf der Aufspannvorrichtung liegende Werkstücke synchron bearbeitet werden, da sich dann ein geringer Koordinations- und Steueraufwand bei minimierten Bearbeitungsnebenzeiten und Bauraumoptimierung ergibt.

Erfindungsgemäß ist vorgesehen, dass die Werkzeugwechselvorrichtung zur Aufnahme von Bearbeitungswerkzeugen und/oder Bearbeitungsaggregaten (Werkzeugen) mindestens eine erste und eine zweite Aufnahmeeinrichtung mit entsprechenden ersten und zweiten Aufnahmen für Bearbeitungswerkzeuge und/oder Bearbeitungsaggregate aufweist, wobei die ersten und zweiten Aufnahmen entsprechend an ersten und zweiten Umfängen angeordnet sind. Aus einer Richtung betrachtet, die senkrecht zu einer Ebene eines der Umfänge ist, sind die ersten und zweiten Aufnahmen auf einer Seite der balkenförmigen Führungsanordnung und gemeinsam vorne oder hinten an der balkenförmigen Führungsanordnung angeordnet. Um Kollisionen zu verhindern und Bauraum einzusparen, sind die Aufnahmeeinrichtungen senkrecht zu einer Ebene der Umfänge versetzt angeordnet, wobei der Versatz der ersten und der zweiten Aufnahme zum Werkzeugwechsel einem entsprechenden Versatz der Werkzeugspindeln entsprechen kann. In einer bevorzugten Ausführungsform sind die ersten und zweiten Umfänge so angeordnet, dass sie sich, aus einer Richtung betrachtet, die senkrecht zu einer Ebene eines der Umfänge ist, schneiden. Ebenso denkbar sind andere Anordnungen, die ermöglichen, das Raumvolumen im Bereich des Werkzeugmagazins zu nutzen und Kollisionen zu vermeiden. Beispielsweise könnte der erste Umfang komplett innerhalb des zweiten Umfangs liegen oder umgekehrt.

In einer bevorzugten Ausführungsform der Erfindung greift eine vordere Spindeleinheit auf die untere Aufnahmeeinrichtung zu und eine hintere Spindel auf die obere Aufnahmeeinrichtung und beide Aufnahmeeinrichtungen sind hinten an der balkenförmigen Führungseinrichtung angeordnet. Gemäß einer besonders vorteilhaften Ausführungsform sind mindestens eine Drehachse der Werkzeugaufnahmevorrichtung und
eine Drehachse der Spindeleinheit im gleichen Abstand zur balkenförmigen Führungsanordnung angeordnet.

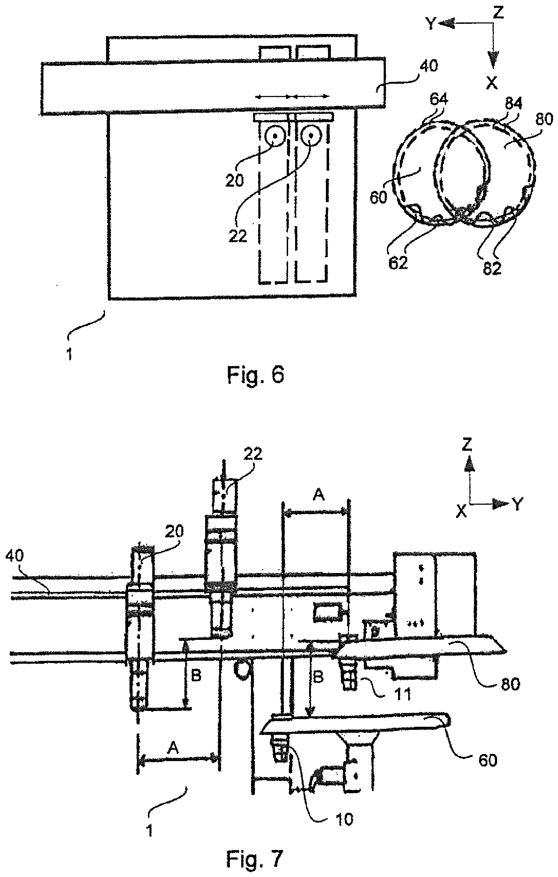

Im Zuge eines Werkzeugwechsels werden beide Spindeleinheiten entlang der balkenförmigen Führungseinrichtung in Magazinrichtung verfahren. In der in Fig. 6 dargestellten bevorzugten Ausführungsform werden beide Spindeleinheiten nach hinten verfahren. Um den Werkzeugwechsel besonders zeiteffizient zu gestalten, werden beide Spindeleinheiten gemeinsam insbesondere gleichzeitig nach hinten verfahren. Spätestens zum Zeitpunkt des Werkzeugwechsels nehmen die Spindeleinheiten, betrachtet aus einer Richtung, die parallel zu einer Ebene eines der Umfänge ist, den horizontalen Abstand A zueinander ein, der, aus dieser Richtung betrachtet, dem horizontalen Abstand der einzuwechselnden Werkzeuge entspricht. Gleichermaßen nehmen die Spindeleinheiten spätestens zum Zeitpunkt des Werkzeugwechsels aus einer Richtung betrachtet, die parallel zu einer Ebene eines der Umfänge ist, den vertikalen Abstand B zueinander ein, der, aus dieser Richtung betrachtet, dem vertikalen Abstand der einzuwechselnden Werkzeuge entspricht. Die entsprechenden Spindeleinheiten können im Rahmen der Erfindung zu verschiedenen Maschinenhaupt- oder Nebenzeiten vor Erreichen des Werkzeugmagazins den horizontalen Abstand A bzw. dem vertikalen Abstand B aufweisen. Bei dem horizontalen Abstand A bzw. den vertikalen Abstand B kann es sich um einen konstanten oder abschnittsweise konstanten Abstand handeln.

Prinzipiell ist im Rahmen der Erfindung die stationäre Anordnung der Aufnahmeeinrichtungen möglich. Um jedoch den Zugriff auf die jeweilige Aufnahmeeinrichtung flexibler zu gestalten, ist gemäß einer Weiterbildung der Erfindung vorgesehen, dass mindestens eine Aufnahmeeinrichtung, bevorzugt gemeinsam mit einer Bearbeitungseinheit, verfahrbar ist. Dabei ist es besonders bevorzugt, dass mindestens eine Aufnahmeeinrichtung mit einer Bearbeitungseinheit gekoppelt ist. Für eine Ausführungsform ist eine tragende Kopplung zwischen Aufnahmeeinrichtung und Spindeleinheit vorgesehen, so dass sich eine einfache Konstruktion ohne separaten Antrieb ergibt.

Weitere Merkmale und Vorteile der Erfindung werden anhand der nachfolgenden ausführlichen Beschreibung noch näher ersichtlich werden.

### Kurze Beschreibung der Zeichnungen

- Fig. 1: zeigt eine schematische Draufsicht einer Bearbeitungsvorrichtung mit einer Werkzeugaufnahmeeinrichtung an einem ersten Beispiel des Stands der Technik;
- Fig. 2: zeigt eine schematische Draufsicht einer Bearbeitungsvorrichtung mit zwei Werkzeugaufnahmeeinrichtungen an einem zweiten Beispiel des Stands der Technik;
- Fig. 3: zeigt eine schematische Draufsicht einer Bearbeitungsvorrichtung mit einer Werkzeugaufnahmeeinrichtung an einem dritten Beispiel des Stands der Technik;
- Fig. 4: zeigt eine schematische Draufsicht einer Bearbeitungsvorrichtung mit einer Werkzeugaufnahmeeinrichtung an einem vierten Beispiel des Stands der Technik;
- Fig. 5: zeigt eine schematische Draufsicht einer Bearbeitungsvorrichtung mit mindestens einer Werkzeugaufnahmeeinrichtung an einem fünften Beispiel des Stands der Technik;
- Fig. 6: zeigt eine schematische Draufsicht einer Bearbeitungsvorrichtung mit mindestens zwei Werkzeugaufnahmeeinrichtungen gemäß einer ersten Ausführungsform der vorliegenden Erfindung;
- Fig. 7: zeigt eine schematische Seitenansicht einer Bearbeitungsvorrichtung mit mindestens zwei Werkzeugaufnahmeeinrichtungen gemäß einer zweiten Ausführungsform der vorliegenden Erfindung;
- Fig. 8: zeigt eine schematische Draufsicht einer Bearbeitungsvorrichtung mit mindestens zwei Werkzeugaufnahmeeinrichtungen gemäß einer dritten Ausführungsform der vorliegenden Erfindung;
- Fig. 9: zeigt eine schematische Draufsicht eines Ausschnitts einer Bearbeitungsvorrichtung mit mindestens zwei Werkzeugaufnahmeeinrichtungen, die jede einzelne Werkzeugaufnahmen in eine bestimmte Werkzeugwechselposition gemäß einer Variante einer ersten oder zweiten Ausführungsform der vorliegenden Erfindung bringen können;

Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

Eine Bearbeitungsvorrichtung 1 gemäß der vorliegenden Erfindung ist in Fig. 6 schematisch in einer Draufsicht gezeigt. Bei dieser Bearbeitungsvorrichtung 1 bzw. diesem Bearbeitungszentrum (nicht dargestellt) handelt es sich in der vorliegenden Ausführungsform um eine Vorrichtung, die zur Bearbeitung von Werkstücken dient, die bevorzugt zumindest teilweise aus Holzwerkstoffen, Kunststoff oder dergleichen bestehen, wie beispielsweise Möbelfronten, Arbeitsplatten und dergleichen. Es ist jedoch zu beachten, dass die vorliegende Erfindung nicht auf die genannten Materialien beschränkt ist, sondern auch auf andere Materialien angewendet werden kann.

Das Bearbeitungszentrum besitzt zunächst eine Aufspannvorrichtung, die in der vorliegenden Ausführungsform als Aufspanntisch zum Aufspannen der zu bearbeitenden Werkstücke ausgebildet ist. Obgleich der Aufspanntisch auch in Grenzen verfahrbar sein kann, wird er in der vorliegenden Ausführungsform als stationär angenommen.

Oberhalb des Aufspanntisches erstreckt sich in einer ersten Richtung (Y) eine balkenförmige Führungsanordnung, die in einer zweiten Richtung (X) verfahrbar ist, wobei die Richtungen voneinander abweichen und in der dargestellten Ansicht einer bevorzugten Ausführungsform einen rechten Winkel aufspannen. Die balkenförmige Führungsanordnung kann sowohl als Ausleger als auch als Portal ausgebildet sein.

An der balkenförmigen Führungsanordnung 40 sind in der vorliegenden Ausführungsform zwei Bearbeitungseinheiten 20, 22 zum Bearbeiten der Werkstücke angeordnet. Die Bearbeitungseinheiten 20, 22 sind entlang der balkenförmigen Führungsanordnung 40 (in Y-Richtung) sowie senkrecht zur Auslegerebene (in Z-Richtung) verfahrbar, und zwar unabhängig voneinander. Die unabhängige Verfahrbarkeit wird in der vorliegenden Ausführungsform dadurch erreicht, dass die Bearbeitungseinheiten 20, 22 jeweils auf einem Schlitten angeordnet sind. Es ist zu beachten, dass sich der Achsversatz der Spindeleinheiten nicht notwendigerweise, wie im dargestellten Beispiel, ausschließlich in Y-Richtung erstreckt, sondern auch alleinig oder zusätzlich in X-Richtung erstrecken kann.

Die Bearbeitungseinheiten 20, 22 können wie in den vorliegenden Ausführungsformen auch als Werkzeugwechselspindeln ausgestaltet vorliegen. In solche Werkzeugwechselspindeln können je nach Bedarf unterschiedlichste Bearbeitungswerkzeuge und Bearbeitungsaggregate eingewechselt werden. Bei den Bearbeitungswerkzeugen bzw. Bearbeitungsaggregaten kann es sich beispielsweise um Werkzeuge bzw. Aggregate zur spanenden Bearbeitung von Werkstücken handeln. Bei Bearbeitungsaggregaten kann es sich jedoch auch um vielfältige andere Aggregate handeln, wie beispielsweise einem Aggregat zum Beschichten oder Bemustern einer Werkstückoberfläche bzw. zum Aufbringen eines beliebigen Oberflächenmaterials.

An einem Ende des Auslegers 40 ist ferner eine Werkzeugwechselvorrichtung angeordnet. Es ist zu beachten, dass die Werkzeugwechselvorrichtung bevorzugt vorne oder hinten (in Y-Richtung) angeordnet ist, allerdings auch andere Anordnungen, beispielsweise eine Beabstandung zusätzlich oder alleinig in X-Richtung bezüglich der Längsachse der balkenförmigen Führungsanordnung, denkbar sind. Somit soll also durch die überaus bevorzugte Anordnung der Werkzeugwechselvorrichtung an einem vorderen oder hinteren Ende (in Y-Richtung) des Auslegers andere Anordnungen der Werkzeugwechselvorrichtung im Bauraum der Bearbeitungsvorrichtung nicht ausgeschlossen werden. Mögliche Kollisionen zwischen einzelnen stationären oder bewegten Bestandteilen der Bearbeitungsvorrichtung werden durch eine Variation der Anordnung der Bestandteile in Z-Richtung innerhalb des Bauraums der Bearbeitungsvorrichtung vermieden.

Die Werkzeugwechselvorrichtung dient dem automatischen Einwechseln von Bearbeitungswerkzeugen und/oder Bearbeitungsaggregaten (im Folgenden als Werkzeuge bezeichnet) in die Bearbeitungseinheiten 20, 22. Auf diese Weise können die Bearbeitungseinheiten 20, 22 problemlos und
zügig mit dem gewünschten Werkzeug bzw. dem gewünschten Aggregat bestückt werden.

Die Werkzeugwechselvorrichtung besitzt zunächst eine erste Aufnahmeeinrichtung 60 mit mehreren ersten Aufnahmen 62, in denen die Werkzeuge 10 aufgenommen werden. Vorzugsweise sind die Werkzeuge in diesen Aufnahmen 62 nach unten hängend angebracht. Diese ersten Aufnahmen 62 sind an einem ersten Umfang 64 angeordnet. Vorzugsweise ist unter diesem Umfang der Randbereich der Aufnahmeeinrichtung zu verstehen.

Ferner weist die Werkzeugwechselvorrichtung eine zweite Aufnahmeeinrichtung 80 mit mehreren zweiten Aufnahmen 82 auf, die ebenfalls Werkzeuge aufnehmen. Diese zweiten Aufnahmen 82 sind an einem zweiten Umfang 84 angeordnet. Vorzugsweise ist unter dem Umfang der Randbereich der Aufnahmeeinrichtung zu verstehen. Dabei sind die erste 60 und zweite 80 Aufnahmeeinrichtung derart angeordnet, dass aus einer Richtung betrachtet, die senkrecht zu der Ebene eines der Umfänge ist, eine erste Aufnahme 62 zu einer zweiten Aufnahme 82 den Achsabstand der Bearbeitungseinheiten 20, 22 einnimmt.

Wie in Fig. 7 gezeigt, nehmen die Werkzeuge 10, 11 in einer Wechselposition bevorzugt eine Position am Umfang der ersten oder zweiten Aufnahme ein, die den kleinsten Abstand zur entsprechenden Bearbeitungseinheit aufweist um ein einfaches Anfahren der einzuwechselnden Werkzeuge zu ermöglichen. In einer Wechselposition entspricht der Abstand der einzuwechselnden Werkzeuge dem Abstand A bzw. dem Abstand B der Bearbeitungseinheiten 20, 22, wie in Fig. 7 gezeigt. Entsprechend einer erfindungsgemäßen Ausführungsform ist der erste und zweite Umfang 64, 84 der ersten und zweiten Werkzeugaufnahmeeinrichtung 60, 80 mit mehreren Werkzeugen in mehreren Werkzeugaufnahmen 62, 82, beispielsweise jeweils 4, 6, 8, 16, 32 oder 64 Werkzeugen und/ oder Werkzeugaufnahmen bestückt oder ausgestattet. In einer bevorzugten Ausführungsform entsprechen die exemplarisch dargestellten Werkzeuge 10, 11 einem der mehreren Werkzeuge in der Werkzeugwechselposition. Die Werkzeuge können wahllos angeordnet werden und durch ansteuern des entsprechenden Werkzeugplatzes je nach Programm zugesteuert werden.

Die Ebenen der ersten und zweiten Umfänge sind die Ebenen, die durch die ersten und zweiten Umfänge definiert sind und müssen nicht notwendigerweise parallel zueinander sein, sind es jedoch vorzugsweise. Die Größe der Umfänge wird weitestgehend von den Abmessungen der zu speichernden Werkzeuge 10, 11 bestimmt. Dabei wird ein Kompromiss zwischen maximaler Platzersparnis, Zugänglichkeit der Werkzeuge, dem Aufwand der technischen Umsetzung zu finden sein.

In diesem Zusammenhang ist zu beachten, dass auch mehr als nur eine Aufnahmeeinrichtung je Bearbeitungseinheit vorgesehen sein kann. Das führt dazu, dass zur Aufnahme weiterer Werkzeuge nicht notwendigerweise eine Vergrößerung der Aufnahmeeinrichtung (z.B. des Tellerumfangs) nötig ist. Gedanke der Erfindung ist es, mindestens zwei Werkzeuge in eine Wechselposition zu bringen, um einen gleichzeitigen Werkzeugwechsel zu ermöglichen, wobei der Abstand der Werkzeuge dem Spindelabstand entspricht. Die Abstände der Werkzeuge werden von geeigneten Referenzgeometrien definiert, als Referenzgeometrien können dabei beispielsweise die Achsen der Werkzeuge und Werkzeugspindeln oder die untersten Flächen der Werkzeugspindeln und die Flächen der einzuwechselnden Werkzeuge, in einer vorzugsweise parallelen Anordnung dieser Ebenen, dienen.

Ferner können die Aufnahmeeinrichtungen - unabhängig von der Anzahl - unterschiedlichste Geometrien aufweisen, einschließlich polygonaler Formen, beispielsweise rechteckig bis hin zu vieleckig. Die ersten (zweiten) Aufnahmen 62 (82) sind dabei entlang der ersten (zweiten) Umfänge 64 (84) der ersten (zweiten) Aufnahmeeinrichtungen 60 (80) angeordnet. Alternativ oder zusätzlich können auch lineare Aufnahmeeinrichtungen (z.B. Regal oder Kammwechsler) oder sonstige Aufnahmeeinrichtungen zum Einsatz kommen.

Erfindungsgemäß ist die zweite Aufnahmeeinrichtung 80 bezüglich der ersten Aufnahmeeinrichtung 60 in einer Richtung senkrecht zu einer Ebene des ersten oder zweiten Umfangs der ersten 60 oder zweiten 80 Aufnahmeeinrichtung versetzt angeordnet. Die zweite Aufnahmeeinrichtung 80 ist dabei zu der ersten Aufnahmeeinrichtung 60 in einem vorbestimmten Abstand versetzt, und zwar bevorzugt nach oben hin versetzt, wie zum Beispiel in Fig. 7 gezeigt. Dieser Abstand wird beispielweise in Anbetracht der Länge der Werkzeuge 11 in der zweiten Aufnahmeeinrichtung 80 festgelegt.

Dadurch wird erreicht, dass die zweite Aufnahmeeinrichtung 80 ein festes Höhenniveau bezüglich der ersten Aufnahmeeinrichtung 60 aufweist, was eine einfache technische Realisierung ermöglicht. Gleichzeitig ist eine leichte Zugänglichkeit der Werkzeuge 11 in den ersten Aufnahmen 62 der ersten Aufnahmeeinrichtung 60 möglich. Der zweite Umfang 84 der zweiten Aufnahmeeinrichtung 80 sollte dabei vorzugsweise derart bemessen sein, dass die Werkzeuge 11 in den zweiten Aufnahmen 62 die Zugänglichkeit der Werkzeuge 11 in der darunter angeordneten ersten Aufnahmeeinheit 60 nicht behindern und dass die zweiten Aufnahmen 82 der zweiten Aufnahmeeinrichtung 80 zu den ersten Aufnahmen 62 der ersten Aufnahmeeinrichtung 60 einen Abstand A in einem Bereich einnehmen, an dem die Werkzeuge 10, 11 den Bearbeitungseinheiten 20, 22 bzw. den Spindeleinheiten behinderungsfrei zugänglich sind.

Gemäß einer zweiten bevorzugten Ausführungsform ist die zweite Aufnahmeeinrichtung 80 bezüglich der ersten Aufnahmeeinrichtung 60 in der Richtung verfahrbar, die senkrecht zu einer Ebene des ersten 84 oder zweiten 64 Umfangs der ersten 60 oder zweiten 80 Aufnahmeeinrichtung
ist. Vorzugsweise wird die zweite Aufnahmeeinrichtung 80 nach oben verfahren. Dadurch kann beispielsweise die zweite Aufnahmeeinrichtung 80 derart verfahren werden, dass die Werkzeuge 10 in den ersten 62 und zweiten 82 Aufnahmen leicht durch die Spindel erreicht und gewechselt werden können.

Durch die Verfahrbarkeit der zweiten Aufnahmeeinrichtung 80 wird darüber hinaus die Möglichkeit zur Platzersparnis weiter verbessert, da zum Beispiel, wenn kein Wechsel der Werkzeuge 10, 11 durchgeführt wird, der Abstand der zweiten Aufnahmeeinrichtung 80 zur ersten Aufnahmeeinrichtung 60 geringer sein kann als er nach Ausfahren der Aufnahmeeinrichtung 80, z.B. bei einem Werkzeugwechsel, ist. Dabei sind vorzugsweise Aussparungen in der ersten Aufnahmeeinrichtung 60 vorgesehen, in die sich die Werkzeuge 10 in den zweiten Aufnahmen 82 erstrecken können. Der zweite Umfang 84 sollte dann so gestaltet sein, dass die Werkzeuge 11 in den zweiten Aufnahmen 82 innerhalb der Fläche der ersten Aufnahmeeinrichtung 60 liegen, unterhalb der sich keine Werkzeuge 10 in den ersten Aufnahmen 62 befinden.

Bezüglich der Verfahrbarkeit ist zu beachten, dass die erste und die zweite Aufnahmeeinrichtung 60, 80 beide verfahrbar sein können, und zwar bevorzugt unabhängig voneinander.

Dabei ist die erste Aufnahmeeinrichtung 60 unabhängig von der zweiten Aufnahmeeinrichtung 80 verdrehbar ausgebildet. Dabei kann jedes Werkzeug 10, 11 in eine Übergabeposition gedreht werden. Insbesondere weist die erste Aufnahmeeinrichtungen 60 einen ersten Mittelpunkt, der durch den ersten Umfang 64 definiert ist, und die zweite Aufnahmeeinrichtung 80 einen zweiten Mittelpunkt, der durch den zweiten Umfang 84 definiert ist, auf. Dabei können die ersten und zweiten Mittelpunkte nur in der Richtung senkrecht zu den der Ebenen des ersten und zweiten Umfangs 64, 84 der ersten 60 und zweiten 80 Aufnahmeeinrichtung und in einer Richtung versetzt sein und der erste Umfang 64 um den Abstand A der Bearbeitungseinheiten 20, 22 größer als der zweite Umfang 84 sein. Dabei fallen die ersten und zweiten Achsen, die durch die ersten und zweiten Mittelpunkte der ersten und zweiten Umfänge 64, 84 der ersten und zweiten Aufnahmeeinrichtungen 60, 80 definiert sind zusammen.

Weiter vorteilhaft ist die Ausführung des ersten und zweiten Umfangs 64, 84 als gleiche geometrische Formen und eine versetzte Anordnung der Achsen, die durch den ersten und zweiten Umfang 64, 84 definiert werden, im Abstand A. In einer besonders bevorzugten Ausführungsform sind die ersten und zweiten Umfänge 64, 84 kreisförmig gestaltet. Durch die kreisförmige Gestaltung der Umfänge wird die beste Anfahrbarkeit für die Spindel ermöglicht. Weiter vorteilhaft ist eine Öffnung der Aufnahmen in eine Richtung, die radial zu der Aufnahmeeinrichtung ist. Dadurch wird insbesondere die Anfahrbarkeit durch die Spindel und die Zugänglichkeit verbessert.

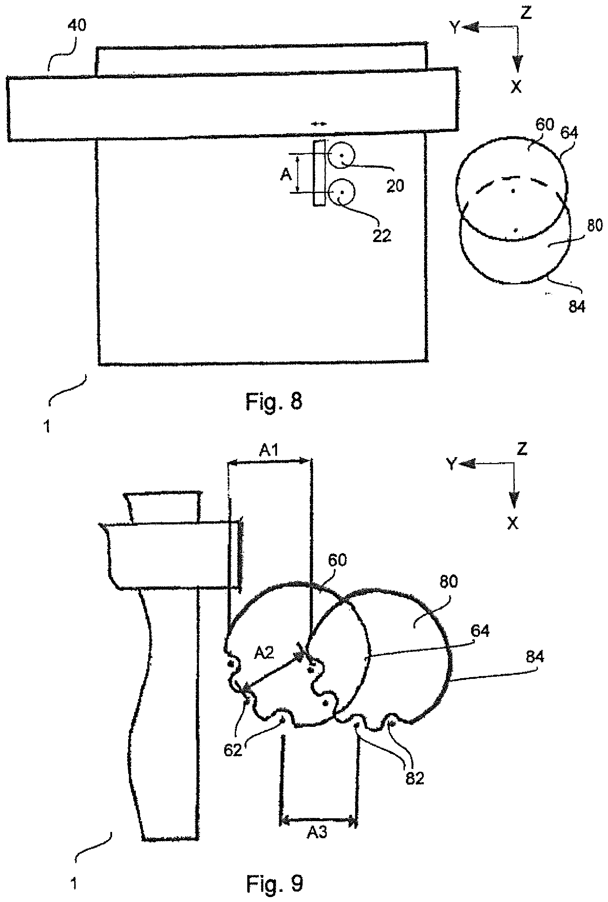

Die oben genannten Merkmale der einzelnen Ausführungsformen können ebenso Anwendung für die Anordnung der Spindeln bzw. der ersten und zweiten Bearbeitungseinheit 20, 22 in einem Abstand A zueinander, der sich in Richtung X erstreckt, finden. Die Bearbeitungseinheiten 20, 22 können auf separaten Führungseinheiten angeordnet sein oder über einen gemeinsamen Schlitten auf einer Führungseinheit bewegt werden (siehe Fig. 8). Um den Gedanken der Erfindung für die beschriebene Spindelanordnung aufzugreifen, werden die ersten und zweiten Aufnahmeeinrichtungen 60, 80 so angeordnet, dass an eine erste und eine zweite Aufnahme 62, 82 der ersten und zweiten Aufnahmeeinrichtung 60, 80 in eine Werkzeugwechselposition gebracht werden können, in der die erste und zweite Aufnahme 62, 82 den Spindelabstand A in Richtung X einnehmen. Bevorzugt werden die Achsen der Aufnahmeeinrichtungen 60, 80 zu diesem Zweck in X Richtung versetzt angeordnet (siehe Fig. 8). Ebenso kann eine entsprechende Werkzeugwechselposition (Abstand A der einzuwechselnden Werkzeuge in Richtung X) der Werkzeuge allerdings auch durch verschiedene geometrische Formen der ersten und zweiten Umfänge 64, 84 herbeigeführt werden.

Im Rahmen der Erfindung sitzen die einzuwechselnden Werkzeuge auf einer Werkzeugwechselposition an einer Stelle A1 (siehe Fig. 9) der ersten und zweiten Aufnahmen 62, 82 an der eine Entnahme der Werkzeuge über eine zur Aufnahmeeinrichtung radiale Bewegung möglich ist. Der einzunehmende Abstand A kann allerdings auch durch eine Projektion des Spindelabstands auf die ersten und zweiten Aufnahmen definiert werden, insbesondere bei einer nicht senkrechten oder parallelen Anordnung der Spindeleinheiten bezogen auf die balkenförmige Führungsanordnung. Ebenso ist es möglich, dass für die Werkzeugwechselpositionen keine Radial ansteuerbaren Positionen vorgesehen sind. Somit ist es möglich sämtliche Kombinationen aus ersten und zweiten Aufnahmen 62, 82 (A1 - A3) als Werkzeugwechselpositionen festzulegen.

Vorteilhafterweise ist die vorliegende Erfindung mit Aufnahmen gestaltet, die keine Kröpfung aufweisen. Dies bedeutet, dass die Öffnung der Aufnahmen radial zur Aufnahmeeinrichtung ausgebildet ist. Dadurch wird die Anfahrbarkeit durch die Spindel verbessert und eine leichtere Zugänglichkeit ermöglicht. Alternativ ist es jedoch ebenso möglich, gekröpfte oder sonstige Aufnahmen vorzusehen.

Typischerweise wird ein Zwei- oder Mehrscheibenmagazin, insbesondere eine Aufnahmeeinrichtung 60, 80, insbesondere bestehend aus mehreren Tellerwechslern, in einer Bearbeitungsvorrichtung, insbesondere einem Bearbeitungszentrum zur Bearbeitungen von Werkstücken eingesetzt, die bevorzugt zumindest teilweise aus Holz, Holzwerstoffen, Kunststoff oder dergleichen bestehen. Dabei dient ein Aufspanntisch zur Aufspannung der zu bearbeitenden Werkstücke. Eine balkenförmige Führungseinrichtung ist derart angeordnet, dass sie sich zumindest teilweise über den Aufspanntisch erstreckt. Diese kann auch als Portal oder auf ähnliche Weise konstruiert sein. Der Aufspanntisch und die balkenförmige Führungseinrichtung sind in zumindest einer Richtung zueinander verfahrbar.

An der Führungseinrichtung sind mindestens zwei Spindeleinheiten, bevorzugt in einem Abstand A, der bevorzugt ein zumindest abschnittsweise konstanter Abstand ist, verfahrbar angeordnet. Durch Verwendung der Bearbeitungsvorrichtungs 1 in einer so gestalteten Weise, können Werkstücke billiger hergestellt werden, da die Bearbeitungseinheiten 20, 22 schnell, insbesondere gleichzeitig und damit kostengünstig Werkzeuge austauschen können. Dabei können das erste einzuwechselnde Werkzeug in der ersten Aufnahmeeinrichtung und das zweite einzuwechselnde Werkzeug in der zweiten Aufnahmeeinrichtung an einer beliebigen Stelle in der ersten und zweiten Aufnahmeeinrichtung sitzen und in die Werkzeugwechselposition gedreht werden.

In einer bevorzugten Ausführungsform ist für die erste Spindel 20 eine Auswahl von n Werkzeugen in der ersten Aufnahmeeinrichtung 60 zum Austausch und für die zweite Spindel 22 eine Auswahl von m Werkzeugen in der zweiten Aufnahmeeinrichtung gespeichert. So können insgesamt mindestens n mal m Werkzeugkombinationen in eine Werkzeugwechselposition gebracht werden. Es ist zu beachten, dass im Allgemeinen für die Bearbeitungsvorrichtung nicht ausgeschlossen werden soll, dass alle Werkzeuge nicht gleichzeitig ausgetauscht werden oder ein Werkzeug aus ersten Aufnahmeeinrichtung in die zweite Spindeleinheit eingewechselt wird oder umgekehrt.

Bei der Darstellung der Erfindung wurde angegeben, dass die Werkzeuge 10, 11 nach unten hängend in den Aufnahmen angeordnet sind. Ebenso können die Werkzeuge 10, 11 darin aber auch nach oben "stehend" aufgenommen sein. Des Weiteren wurde dargelegt, dass die zweite Aufnahmeeinrichtung 80 nach oben versetzt oder verfahrbar ist. Ebenso ist es auch möglich, dass ein Versetzen oder Verfahren nach unten gegeben ist.

Auch wenn die Erfindung für die Ausgestaltung des Bearbeitungsvorrichtungs 1 als Tellerwechsler dargestellt wurde, ist klar, dass der Erfindungsgedanke auch andersartige Magazine wie beispielsweise Kettenwechsler umfasst, die zur Aufbewahrung von Werkzeugen 2 dienen und bei denen ein erfindungsgemäßer Werkzeugwechsel erreicht werden kann.

Darüber hinaus wird dem Fachmann offensichtlich sein, dass sich die erfindungsgemäßen Vorteile auch auf ein Magazin erstrecken, dass zusätzlich zu ersten und zweiten Aufnahmeeinrichtungen weitere Aufnahmeeinrichtungen aufweist, die gemäß dem Erfindungsgedanken gestaltet sind.

## Patentansprüche

1. Bearbeitungsvorrichtung (1), insbesondere ein Bearbeitungszentrum zur Bearbeitung von Werkstücken, die bevorzugt zumindest teilweise aus Holz, Holzwerkstoffen, Kunststoff oder dergleichen bestehen, mit:
mindestens zwei Bearbeitungseinheiten (20, 22), die in einem Spindelabstand A zueinander angeordnet sind, zum Bearbeiten der Werkstücke,
einer Aufspanneinrichtung zum Aufspannen der zu bearbeitenden Werkstücke, einer balkenförmigen Führungsanordnung (40), wobei sich die balkenförmige Führungsanordnung (40) in einer ersten Richtung (Y) erstreckt und die balkenförmige Führungsanordnung (40) und die Aufspanneinrichtung zum Aufspannen der zu bearbeitenden Werkstücke in einer zweiten Richtung (X) relativ zueinander verfahrbar sind,
einer ersten Aufnahmeeinrichtung (60) mit mehreren ersten Aufnahmen (62) für Bearbeitungswerkzeuge und/oder Bearbeitungsaggregate (10), wobei die ersten Aufnahmen (62) auf einem ersten Umfang (64) angeordnet sind,
einer zweiten Aufnahmeeinrichtung (80) mit mehreren zweiten Aufnahmen (82) für Bearbeitungswerkzeuge und/oder Bearbeitungsaggregate (11), wobei die zweiten Aufnahmen (82) auf einem zweiten Umfang (84) angeordnet sind,
der Abstand einer ersten Aufnahme (62) und einer zweiten Aufnahme (82) in einer Übergabeposition zum Einwechseln der Bearbeitungswerkzeuge und/oder Bearbeitungsaggregate (10, 11) dem Spindelabstand A entspricht, **dadurch gekennzeichnet, dass**
die zweite Aufnahmeeinrichtung (80) bezüglich der ersten Aufnahmeeinrichtung (60) in einer Richtung, die senkrecht zu einer Ebene des Umfangs (64, 84) der ersten oder zweiten Aufnahmeeinrichtung (60, 80) ist, versetzt angeordnet ist.

2. Bearbeitungsvorrichtung (1) nach einem der vorhergehenden Ansprüche, bei der die erste Aufnahmeeinrichtung (60) um eine Achse senkrecht zu einer Ebene des ersten Umfangs (64) der ersten Aufnahmeeinrichtung (60) verdrehbar ist.

3. Bearbeitungsvorrichtung (1) nach einem der vorhergehenden Ansprüche, bei der die zweite Aufnahmeeinrichtung (80) um eine Achse senkrecht zu einer Ebene des zweiten Umfangs (84) der zweiten Aufnahmeeinrichtung (80) verdrehbar ist.

4. Bearbeitungsvorrichtung (1) nach einem der vorhergehenden Ansprüche, bei der die erste Aufnahmeeinrichtung (60) unabhängig von der zweiten Aufnahmeeinrichtung (80) verdrehbar ist.

5. Bearbeitungsvorrichtung (1) nach einem der vorhergehenden Ansprüche, bei der sich der Spindelabstand A der Bearbeitungseinheiten (20, 22) in Richtung (Y) erstreckt.

6. Bearbeitungsvorrichtung (1) nach einem der vorhergehenden Ansprüche, bei der sich der Spindelabstand A der Bearbeitungseinheiten (20, 22) in Richtung (X) erstreckt.

7. Bearbeitungsvorrichtung (1) nach einem der vorhergehenden Ansprüche, bei der die Bearbeitungseinheiten (20, 22) entlang der balkenförmigen Führungsanordnung (40) in mindestens zwei Richtungen (Y, Z) verfahrbar sind, wobei von den Bearbeitungseinheiten (20, 22) mindestens zwei Bearbeitungseinheiten (20, 22) in eine Richtung (Z) unabhängig voneinander verfahrbar sind.

8. Bearbeitungsvorrichtung (1) nach einem der vorhergehenden Ansprüche, bei der der Abstand der ersten Aufnahmeeinrichtung (60) und der zweiten Aufnahmeeinrichtung (80) oder der Abstand einer ersten Aufnahme (62) der ersten Aufnahmeeinrichtung (60) und einer zweiten Aufnahme (82) der zweiten Aufnahmeeinrichtung (80) dem Spindelabstand B in Richtung (Z) in der Übergabeposition entspricht.

9. Bearbeitungsvorrichtung (1) nach einem der vorhergehenden Ansprüche, bei dem die zweite Aufnahmeeinrichtung (80) bezüglich der ersten Aufnahmeeinrichtung (60) in einer Richtung, die senkrecht zu einer Ebene des Umfangs (64, 84) der ersten oder zweiten Aufnahmeeinrichtung (60, 80) ist, nach oben versetzt angeordnet ist.

10. Bearbeitungsvorrichtung (1) nach einem der vorhergehenden Ansprüche, bei der die erste Aufnahmeeinrichtung (60) einen ersten Mittelpunkt aufweist, der durch den ersten Umfang (64) definiert ist und die zweite Aufnahmeeinrichtung (80) einen zweiten Mittelpunkt aufweist, der durch den zweiten Umfang (84) definiert ist, und diese ersten und zweiten Mittelpunkte mindestens in einer Richtung (X, Y) und in einer Richtung (Z) versetzt sind.

11. Bearbeitungsvorrichtung (1) nach einem der vorhergehenden Ansprüche, bei dem die Öffnungen der Aufnahmen (62, 82) zumindest einer Aufnahmeeinrichtung (60, 80) radial zu der Aufnahmeeinrichtung (60, 80) ausgebildet sind.

12. Bearbeitungsvorrichtung (1) nach einem der vorhergehenden Ansprüche, bei dem die Öffnungen der Aufnahmen (62, 82) zumindest einer Aufnahmeeinrichtung (60, 80) eine Kröpfung aufweisen.

13. Bearbeitungsvorrichtung (1) nach einem der vorhergehenden Ansprüche, bei dem die Bearbeitungseinheiten (20, 22) im Synchronbetrieb betrieben werden.

14. Verfahren zur Bearbeitung von Werkstücken unter Einsatz einer Bearbeitungsvorrichtung(1) nach einem der vorhergehenden Ansprüche, bei dem ein erstes Bearbeitungswerkzeug oder Bearbeitungsaggregat (10), das dazu bestimmt ist, aus einer ersten Aufnahme (62) in eine erste Bearbeitungseinheit (20) eingewechselt zu werden und ein zweites Bearbeitungswerkzeug oder Bearbeitungsaggregat (11), das dazu bestimmt ist, aus einer zweiten Aufnahme (82) in eine zweite Bearbeitungseinheit (22) eingewechselt zu werden, in eine Übergabeposition gefahren werden,
**dadurch gekennzeichnet, dass**
das erste Bearbeitungswerkzeug oder Bearbeitungsaggregat (10) den Spindelabstand A zum zweiten Bearbeitungswerkzeug oder Bearbeitungsaggregat (11) einnimmt, wobei das erste Bearbeitungswerkzeug oder Bearbeitungsaggregat (10) in die erste Bearbeitungseinheit (20) eingewechselt wird und das zweite Bearbeitungswerkzeug oder Bearbeitungsaggregat (11) in die zweite Bearbeitungseinheit (22) eingewechselt wird, ohne dass die zweite Aufnahmeeinrichtung (80) mit mehreren zweiten Aufnahmen (82) für Bearbeitungswerkzeuge und/oder Bearbeitungsaggregate verfahren, insbesondere verdreht, wird, wobei der Wechsel des erstes Bearbeitungswerkzeugs oder Bearbeitungsaggregats (10) aus der ersten Aufnahme (62) in eine erste Bearbeitungseinheit (20) und des zweiten Bearbeitungswerkzeugs oder Bearbeitungsaggregats (11) aus der zweiten Aufnahme (82) in die zweite Bearbeitungseinheit (22) bevorzugt gleichzeitig stattfindet.

## Claims

1. A machining apparatus (1), in particular a machining centre for machining workpieces which are preferably made at least partially of wood, wood materials, plastic or the like, comprising:
at least two machining units (20, 22) which are arranged apart from one another by a spindle distance A, for machining the workpieces,
a clamping device for clamping the workpieces to be machined, a beam-shaped guide arrangement (40), the beam-shaped guide arrangement (40) extending in a first direction (Y) and the beam-shaped guide arrangement (40) and the clamping device being able to be moved relative to one another in a second direction (X) in order to clamp the workpieces to be machined,
a first receiving device (60) having a number of first receivers (62) for machining tools and/or machining assemblies (10), the first receivers (62) being arranged over a first circumference (64),
a second receiving device (80) having a number of second receivers (82) for machining tools and/or machining assemblies (11), the second receivers (82) being arranged over a second circumference (84),
the distance between the first receiver (62) and a second receiver (82) in a transfer position for changing the machining tools and/or machining assemblies (10, 11) corresponding to the spindle distance A, **characterised in that**
the second receiving device (80) is arranged offset relative to the first receiving device (60) in a direction perpendicular to a plane of the circumference (64, 84) of the first or the second receiving device (60, 80).

2. The machining apparatus (1) according to any of the preceding claims, wherein the first receiving device (60) can be turned about an axis perpendicular to a plane of the first circumference (64) of the first receiving device (60).

3. The machining apparatus (1) according to any of the preceding claims, wherein the second receiving device (80) can be turned about an axis perpendicular to a plane of the second circumference (84) of the second receiving device (80).

4. The machining apparatus (1) according to any of the preceding claims, wherein the first receiving device (60) can be turned independently of the second receiving device (80).

5. The machining apparatus (1) according to any of the preceding claims, wherein the spindle distance A of the machining units (20, 22) extends in direction (Y).

6. The machining apparatus (1) according to any of the preceding claims, wherein the spindle distance A of the machining units (20, 22) extends in direction (X).

7. The machining apparatus (1) according to any of the preceding claims, wherein the machining units (20, 22) can be moved along the beam-shaped guide arrangement (40) in at least two directions (Y, Z), of the machining units (20, 22) at least two machining units (20, 22) being able to be moved independently of one another in a direction (Z).

8. The machining apparatus (1) according to any of the preceding claims, wherein the distance between the first receiving device (60) and the second receiving device (80) or the distance between a first receiver (62) of the first receiving device (60) and a second receiver (82) of the second receiving device (80) corresponds to the spindle distance B in direction (Z) in the transfer position.

9. The machining apparatus (1) according to any of the preceding claims, wherein the second receiving device (80) is arranged upwardly offset relative to the first receiving device (60) in a direction perpendicular to a plane of the circumference (64, 84) of the first or the second receiving device (60, 80).

10. The machining apparatus (1) according to any of the preceding claims, wherein the first receiving device (60) has a first centre point which is defined by the first circumference (64) and the second receiving device (80) has a second centre point which is defined by the second circumference (84), and these first and second centre points are offset at least in a direction (X, Y) and in a direction (Z).

11. The machining apparatus (1) according to any of the preceding claims, wherein the openings of the receivers (62, 82) of at least one receiving device (60, 80) are formed radially to the receiving device (60, 80).

12. The machining apparatus (1) according to any of the preceding claims, wherein the openings of the receivers (62, 82) of at least one receiving device (60, 80) have a bend.

13. The machining apparatus (1) according to any of the preceding claims, wherein the machining units (20, 22) are operated in synchronous operation.

14. A method for machining workpieces using a machining apparatus (1) according to any of the preceding claims, wherein a first machining tool or machining assembly (10), which is intended to be changed from a first receiver (62) into a first machining unit (20), and a second machining tool or machining assembly (11), which is intended to be changed from a second receiver (82) into a second machining unit (22), are moved into a transfer position,
**characterised in that**
the first machining tool or machining assembly (10) adopts the spindle distance A from the second machining tool or machining assembly (11), the first machining tool or machining assembly (10) being changed into the first machining unit (20), and the second machining tool or machining assembly (11) being changed into the second machining unit (22) without the second receiving device (80) with a number of second receivers (82) for machining tools and/or machining assemblies being moved, in particular turned, the change of the first machining tool or machining assembly (10) from the first receiver (62) into a first machining unit (20) and of the second machining tool or machining assembly (11) from the second receiver (82) into the second machining unit (22) preferably taking place simultaneously.

## Revendications

1. Dispositif d'usinage (1), en particulier centre d'usinage destiné à l'usinage de pièces qui sont de préférence au moins partiellement en bois, en dérivés de bois, en plastique ou analogues, avec :
au moins deux unités d'usinage (20, 22), qui sont agencées à une distance entre l'une et l'autre broches A et qui sont destinées à l'usinage des pièces,
un dispositif de fixation destiné à fixer les pièces à usiner,
un dispositif de guidage (40) en forme de barre, lequel dispositif de guidage (40) en forme de barre s'étend dans une première direction (Y) et lequel dispositif de guidage (40) en forme de barre ainsi que le dispositif de fixation sont déplaçables l'un par rapport à l'autre dans une seconde direction (X) afin de fixer les pièces à usiner,
un premier dispositif de logement (60) avec plusieurs premiers logements (62) pour des outils d'usinage et/ou des modules d'usinage (10), lesquels premiers logements (62) sont agencés sur une première périphérie (64),
un second dispositif de logement (80) avec plusieurs seconds logements (82) pour des outils d'usinage et/ou des modules d'usinage (11), lesquels seconds logements (82) sont agencés sur une seconde périphérie (84),
dans lequel la distance entre un premier logement (62) et un second logement (82) dans une position de transfert destinée au remplacement des outils d'usinage et/ou des modules d'usinage (10, 11) correspond à la distance entre broches A,
**caractérisé en ce que** le second dispositif de logement (80) est agencé décalé, par rapport au premier dispositif de logement (60), dans une direction qui est perpendiculaire à un plan de la périphérie (64, 84) du premier ou second dispositif de logement (60, 80).

2. Dispositif d'usinage (1) selon l'une quelconque des revendications précédentes, dans lequel le premier dispositif de logement (60) peut tourner autour d'un axe perpendiculairement à un plan de la première périphérie (64) du premier dispositif de logement (60).

3. Dispositif d'usinage (1) selon l'une quelconque des revendications précédentes, dans lequel le second dispositif de logement (80) peut tourner autour d'un axe perpendiculairement à un plan de la seconde périphérie (84) du second dispositif de logement (80).

4. Dispositif d'usinage (1) selon l'une quelconque des revendications précédentes, dans lequel le premier dispositif de logement (60) peut tourner indépendamment du second dispositif de logement (80).

5. Dispositif d'usinage (1) selon l'une quelconque des revendications précédentes, dans lequel la distance entre broches A des unités d'usinage (20, 22) s'étend dans la direction (Y).

6. Dispositif d'usinage (1) selon l'une quelconque des revendications précédentes, dans lequel la distance entre broches A des unités d'usinage (20, 22) s'étend dans la direction (X).

7. Dispositif d'usinage (1) selon l'une quelconque des revendications précédentes, dans lequel les unités d'usinage (20, 22) sont déplaçables le long du dispositif de guidage (40) en forme de barre dans au moins deux directions (Y, Z), dans lequel, parmi les unités d'usinage (20, 22), au moins deux unités d'usinage (20, 22) sont déplaçables indépendamment l'une de l'autre dans une direction (Z).

8. Dispositif d'usinage (1) selon l'une quelconque des revendications précédentes, dans lequel la distance entre le premier dispositif de logement (60) et le second dispositif de logement (80) ou la distance entre un premier logement (62) du premier dispositif de logement (60) et un second logement (82) du second dispositif de logement (80) correspond à la distance entre broches B dans la direction (Z) dans la position de transfert.

9. Dispositif d'usinage (1) selon l'une quelconque des revendications précédentes, dans lequel le second dispositif de logement (80) est agencé décalé vers le haut par rapport au premier dispositif de logement (60) dans une direction qui est perpendiculaire à un plan de la périphérie (64, 84) du premier ou second dispositif de logement (60, 80).

10. Dispositif d'usinage (1) selon l'une quelconque des revendications précédentes, dans lequel le premier dispositif de logement (60) comporte un premier point central qui est défini par la première périphérie (64) et le second dispositif de logement (80) comporte un second point central qui est défini par la seconde périphérie (84) et dans lequel ces premier et second points centraux sont décalés au moins dans une direction (X, Y) et dans une direction (Z).

11. Dispositif d'usinage (1) selon l'une quelconque des revendications précédentes, dans lequel les ouvertures des logements (62, 82) au moins d'un dispositif de logement (60, 80) sont réalisées de façon radiale par rapport au dispositif de logement (60, 80).

12. Dispositif d'usinage (1) selon l'une quelconque des revendications précédentes, dans lequel les ouvertures des logements (62, 82) au moins d'un dispositif de logement (60, 80) présentent un coude.

13. Dispositif d'usinage (1) selon l'une quelconque des revendications précédentes, dans lequel les unités d'usinage (20, 22) fonctionnent de manière synchrone.

14. Procédé d'usinage de pièces utilisant un dispositif d'usinage (1) selon l'une quelconque des revendications précédentes,
dans lequel un premier outil d'usinage ou module d'usinage (10), qui est destiné à être déplacé hors d'un premier logement (62) jusque dans une première unité d'usinage (20), et un second outil d'usinage ou module d'usinage (11), qui est destiné à être déplacé hors d'un second logement (82) jusque dans une seconde unité d'usinage (22), sont déplacés dans une position de transfert,
**caractérisé en ce que** le premier outil d'usinage ou module d'usinage (10) prend la distance entre broches A par rapport au second outil d'usinage ou module d'usinage (11),
dans lequel le premier outil d'usinage ou module d'usinage (10) est placé dans la première unité d'usinage (20) et le second outil d'usinage ou module d'usinage (11) est placé dans la seconde unité d'usinage (22) sans que le second dispositif de logement (80) avec plusieurs seconds logements (82) destinés à des outils d'usinage et/ou à des modules d'usinage soit déplacé, en particulier tourné,
dans lequel le déplacement du premier outil d'usinage ou module d'usinage (10) hors du premier logement (62) jusque dans une première unité d'usinage (20) et le déplacement du second outil d'usinage ou module d'usinage (11) hors du second logement (82) jusque dans la seconde unité d'usinage (22) ont lieu de préférence simultanément.
